# FASCICULE DE BREVET EUROPEEN

(11) **EP 0 724 071 B1**
(45) Date de publication et mention de la délivrance du brevet: **12.04.2000**
(21) Numéro de dépôt: 96101109.5
(22) Date de dépôt: 26.01.1996
(51) Int. Cl.: F01P 5/02, F28F 9/00, F28D 1/02

(54) **Ensemble comprenant un motoventilateur fixé à un échangeur de chaleur**
Baugruppe mit Gebläse und Wärmetauscher
Assembly comprising a fan attached to a heat exchanger

(30) Priorité: 30.01.1995 FR 9501042
(43) Date de publication de la demande: 31.07.1996
(73) Titulaire: VALEO THERMIQUE MOTEUR, 78320 Le Mesnil Saint-Denis (FR)
(72) Inventeur: Potier, Michel, F-78120 Rambouillet (FR)

(56) Documents cités:
- EP-A- 0 183 596

## Description

L'invention concerne un ensemble comprenant un échangeur de chaleur muni d'un bloc rigide présentant des première et seconde faces principales disposées sensiblement dans des plans parallèles, formé d'au moins une rangée de tubes parallèles entre eux et parallèles auxdits plans, et d'ailettes, et un motoventilateur propre à produire un courant d'air en contact thermique avec l'échangeur de chaleur, le motoventilateur comportant une partie fixe entraînant une partie rotative, appelées ci-après respectivement, par souci de simplicité, moteur et hélice, la partie rotative pouvant tourner autour d'un axe perpendiculaire auxdits plans des faces principales, la partie fixe présentant un flasque tourné vers ladite première face du bloc, par lequel elle est assemblée à l'échangeur de chaleur.

De tels ensembles sont connus notamment pour le refroidissement des moteurs thermiques de véhicules.

Dans ces ensembles connus, le motoventilateur est assemblé à des boîtes à fluide situées aux deux extrémités des blocs tubes-ailettes dans la direction longitudinale des tubes, et/ou à des traverses latérales reliant celles-ci. Le flasque occupant une position centrale, sa liaison avec les boîtes à fluide et les traverses se fait par l'intermédiaire de bras relativement longs, ce qui augmente le poids de l'ensemble et rend difficile l'obtention d'une rigidité suffisante de l'assemblage.

Il est également connu par le document EP 0183 596 un tel ensemble dans lequel le bloc de l'échangeur de chaleur est serré entre des premiers éléments d'appui solidaires du flasque, s'appuyant sur ladite première face, et des seconds éléments d'appui s'appuyant sur ladite seconde face, par des éléments de fixation tels que des vis qui traversent le bloc, les premiers éléments d'appui et les seconds éléments d'appui étant retenus à une distance mutuelle correspondant sensiblement à l'épaisseur du bloc par des entretoises qui traversent également celui-ci, chaque élément de fixation et chaque entretoise étant logés dans un évidement du bloc qui passe entre deux tubes voisins de chaque rangée et qui est formé par des découpes ménagées dans plusieurs ailettes voisines sur toute l'épaisseur du bloc.

Cet ensemble présente les inconvénients non négligeables d'entraîner un complexité de montage du motoventilateur sur l'échangeur de chaleur ainsi qu'un surcoût pour la réalisation de ce motoventilateur et un risque de détérioration du bloc tubes-ailettes entraînant un dysfonctionnement de l'ensemble échangeur de chaleur-motoventilateur.

En effet, l'opérateur doit insérer les entretoises dans les évidemment prévues dans le bloc puis manipuler l'échangeur pour monter le groupe motoventilateur et, durant ces manipulations, cet opérateur doit maintenir ces entretoises pour éviter qu'elles ne quittent les évidements.

En outre, si l'opérateur oublie de monter une entretoise, cela n'empêchera en rien le montage du motoventilateur mais, lors du serrage des vis, ces dernières vont entraîner un rapprochement des éléments d'appuis et dans la zone où l'entretoise est absente, occasionner un écrasement des ailettes du bloc ainsi qu'un défaut de perpendiculaire de l'axe du motoventilateur par rapport a la face du bloc.

Ainsi, l'écrasement des ailettes conduira non seulement à une perte de performance dans l'échange thermique mais aussi à un risque de destruction de l'hélice qui peut venir en contact avec la face du bloc tubes-ailettes.

Le but de l'invention est de remédier à ces inconvénients.

L'invention vise un ensemble du genre défini en introduction, et prévoit que chaque entretoise est formée d'une seule pièce avec l'un des premier et second éléments d'appui auxquels elle est associée et vient en butée sur l'autre de ces éléments d'appui
Des caractéristiques optionnelles de l'invention, complémentaires ou alternatives, sont énoncées ci-après :
- Les éléments de fixation sont disposés, dans le plan de l'une desdites faces principales, aux sommets d'un polygone entourant l'axe du motoventilateur.
- Tous les premiers éléments d'appui, ou tous les seconds éléments d'appui, appartiennent à une même pièce.
- Les premiers éléments d'appui appartiennent audit flasque.
- Les premiers éléments d'appui sont sous la forme de pattes qui s'étendent radialement à l'extérieur de la partie fixe.
- Ladite partie rotative comprend un moyeu pour une hélice de ventilateur, lesdits éléments de fixation étant disposés radialement à l'extérieur du diamètre du moyeu.
- Chaque entretoise a une forme sensiblement annulaire et entoure l'élément de fixation associé.
- Chaque premier élément d'appui présente sur sa face tournée vers le bloc au moins une nervure étroite, allongée de façon à s'étendre en regard des tranches de plusieurs ailettes et propre à déformer celles-ci en creusant son propre logement pour établir un positionnement très stable de l'élément d'appui par rapport au bloc.
- Ladite nervure présente un profil en V et pénètre dans lesdites tranches par son arête.
- Chacun desdits évidements présente un profil rectangulaire et est réalisé en enlevant des bandes d'égale largeur de toutes les ailettes concernées.

Les avantages de l'invention seront exposés plus en détail dans la description ci-après, en se référant aux dessins annexés, sur lesquels :
- la figure 1 est une vue de côté d'un ensemble selon l'invention;
- la figure 2 est une vue de face de ce même ensemble;
- la figure 3 est une vue partielle en coupe selon la ligne III-III de la figure 2;
- la figure 4 est une vue partielle de face du bloc tubes-ailettes montrant un évidement pour le passage d'une vis de fixation et d'une entretoise ;
- la figure 5 est une vue partielle du flasque du motoventilateur montrant une patte d'appui ; et
- la figure 6 est une vue partielle en coupe selon la ligne VI-VI de la figure 5.

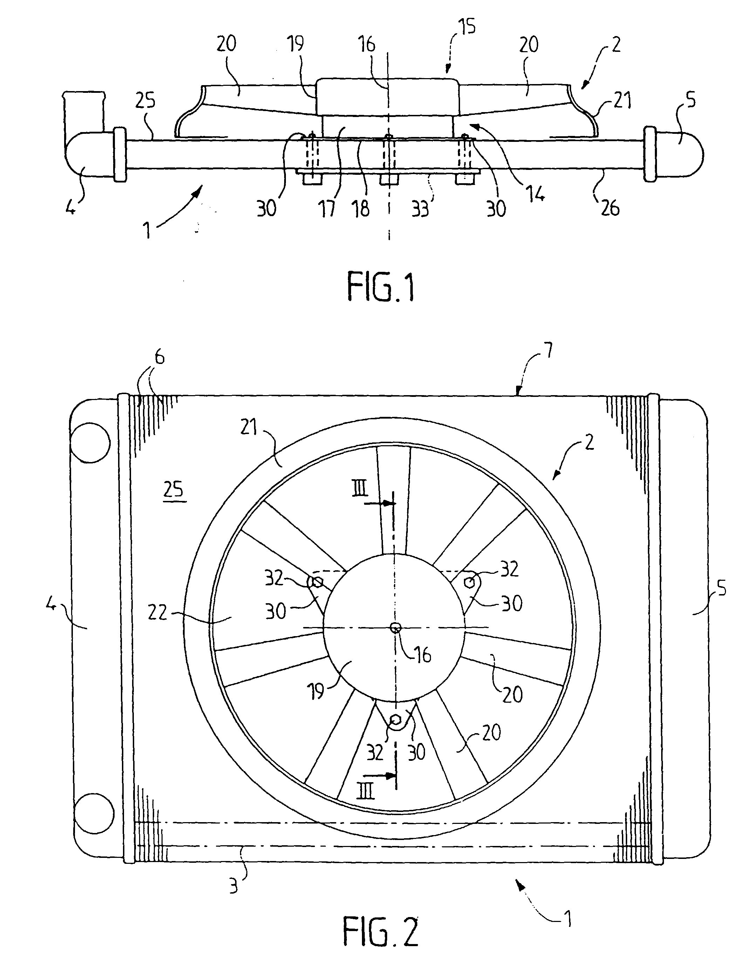

L'ensemble illustré aux figures 1 à 6 comprend un échangeur de chaleur, ici un radiateur 1 destiné au refroidissement du moteur thermique d'un véhicule automobile, et un motoventilateur 2 destiné à produire un courant d'air au travers du radiateur. Ce dernier comprend une série de tubes parallèles 3, formant dans l'exemple représenté deux rangées juxtaposées, les deux extrémités de chaque tube débouchant respectivement dans deux boîtes à fluide 4 et 5. Les tubes traversent des ailettes métalliques rectangulaires 6 s'étendant dans des plans perpendiculaires à la direction longitudinale des tubes. Ceux-ci s'engagent avec serrage dans des orifices des ailettes de façon à réaliser un bon contact thermique entre les tubes et les ailettes. Les tubes et les ailettes forment ainsi un bloc parallélépipédique rigide 7 interposé entre les deux boîtes à fluide.

Le motoventilateur 2 comprend une partie fixe constituant un moteur électrique 14 et une partie rotative constituant une hélice 15, qui peut tourner par rapport à la partie fixe et au radiateur autour d'un axe 16 perpendiculaire aux faces principales 25, 26 du bloc parallélépipédique 7. Le moteur 14 présente un corps 17 de forme sensiblement cylindrique de révolution, fermé du côté du bloc 7 par un flasque sensiblement circulaire 18. L'hélice 15 comprend un moyeu 19 coiffant le corps 17, ouvert vers le bloc et fermé à l'opposé. A partir du moyeu 19 s'érigent des pales radiales 20, dont les extrémités radialement extérieures sont reliées entre elles par une virole 21, de révolution autour de l'axe 16, délimitant un passage annulaire 22 pour le courant d'air produit par les pales 20.

Selon l'invention, le flasque 18 présente trois pattes 30 faisant saillie radialement au-delà du diamètre de la coupelle 17, et disposées à 120° les unes des autres autour de l'axe 16. Chacune des pattes 30 est percée d'un trou circulaire 31, les centres des trois trous 31 étant disposés aux sommets d'un triangle équilatéral. Les pattes 30 et les trous 31 servent à fixer le flasque 18, et par suite le motoventilateur 2, sur le bloc 7 au moyen de trois vis 32 et d'une plaque de fixation 33. Le flasque 18 et la plaque 33 sont appliqués respectivement, par les vis 32, sur les faces principales 25 et 26 du bloc. La plaque 33 présente, en regard de chacune des pattes 30, un bossage 34 faisant saillie à l'opposé du bloc 7, et un manchon tubulaire 35 s'étendant parallèlement à l'axe 16 et s'engageant dans un évidement 36 ménagé dans toute l'épaisseur du bloc et passant entre deux tubes 3 voisins de chaque rangée. L'alésage du manchon 35 est aligné avec le trou 31 et se prolonge à travers le bossage 34, jusqu'au sommet de celui-ci où il s'élargit de façon à loger un écrou 37. Ce dernier coopère avec la vis 32 qui s'engage dans le trou 31 et dans l'alésage du manchon de façon à rapprocher l'un de l'autre le flasque 18 et la plaque 33. Ce rapprochement est limité par la présence du manchon 35 dont l'extrémité libre vient en butée sur la patte 30. La longueur du manchon étant égale à l'épaisseur du bloc, le flasque et la plaque sont simplement appliqués sur les faces de ce dernier sans l'écraser. Cependant, pour éviter tout glissement du flasque par rapport au bloc, il est prévu sur chaque patte 30, sur sa face tournée vers le bloc, une nervure 38 à profil en V limitée par deux faces inclinées 39 et 40 formant un dièdre dont l'arête 41 est perpendiculaire aux tranches des ailettes définissant la face 25 du bloc. Dans l'exemple illustré, l'arête 41 coupe l'axe du trou 31 et la nervure 38 est séparée en deux parties par ce dernier. Lors du serrage des vis 32, la nervure 38, en commençant par son arête 41, vient s'appuyer sur les tranches de plusieurs ailettes voisines et déforme légèrement celles-ci pour se constituer un logement.

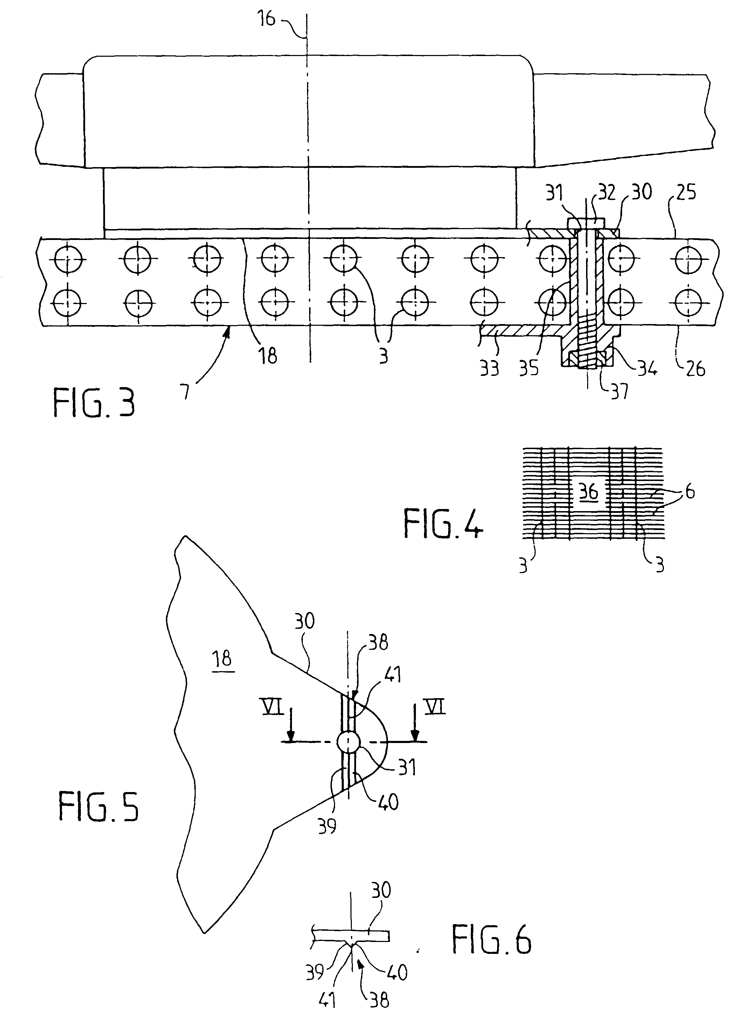

Comme on le voit à la figure 4, l'évidement 36 a un profil rectangulaire, et plus précisément carré, dont le côté correspond au diamètre du manchon 35. Cet évidement résulte de la suppression, dans plusieurs ailettes successives, d'une bande rectangulaire dont la longueur correspond à l'épaisseur du bloc et dont la largeur correspond à la dimension de l'évidement dans la direction d'alignement des tubes dans chaque rangée. Chaque ailettes ainsi découpée est entièrement séparée en deux parties, de part et d'autre de l'évidement. Les découpes nécessaires à la réalisation d'un évidement peuvent être obtenues simultanément sans difficulté, par exemple par poinçonnage.

La plaque 33 peut être réalisée en matière plastique par moulage. Elle peut présenter la forme générale d'un triangle équilatéral dont les côtés sont parallèles à ceux du triangle ayant pour sommets les centres des trous 31. Bien entendu, le nombre de vis de fixation, ou d'éléments de fixation analogues, peut être supérieur à 3 si on le souhaite.

## Revendications

1. Ensemble comprenant un échangeur de chaleur (1) muni d'un bloc rigide (7) présentant des première et seconde faces principales (25, 26) disposées sensiblement dans des plans parallèles, formé d'au moins une rangée de tubes (3) parallèles entre eux et parallèles auxdits plans, et d'ailettes (6), et un motoventilateur (2) propre à produire un courant d'air en contact thermique avec l'échangeur de chaleur, notamment pour le refroidissement d'un moteur thermique de véhicule, le motoventilateur comportant une partie fixe (14) et une partie rotative (15) pouvant tourner autour d'un axe (16) perpendiculaire auxdits plans des faces principales, la partie fixe présentant un flasque (18) tourné vers ladite première face (25) du bloc, par lequel elle est assemblée à l'échangeur de chaleur, ledit bloc étant serré entre des premiers éléments d'appui (30) solidaires du flasque, s'appuyant sur ladite première face (25), et des seconds éléments d'appui (34) s'appuyant sur ladite seconde face (26), par des éléments de fixation (32) tels que des vis qui traversent le bloc, les premiers éléments d'appui et les seconds éléments d'appui étant retenus à une distance mutuelle correspondant sensiblement à l'épaisseur du bloc par des entretoises (35) qui traversent également celui-ci, chaque élément de fixation et chaque entretoise étant logés dans un évidement (36) du bloc qui passe entre deux tubes (3) voisins de chaque rangée et qui est formé par des découpes ménagées dans plusieurs ailettes voisines sur toute l'épaisseur du bloc, caractérisé en ce que chaque entretoise (35) est formée d'une seule pièce avec l'un (34) des premier et second éléments d'appui auxquels elle est associée et vient en butée sur l'autre (30) de ces éléments d'appui.

2. Ensemble selon la revendication 1, caractérisé en ce que les éléments de fixation (32) sont disposés, dans le plan de l'une desdites faces principales, aux sommets d'un polygone entourant l'axe (16) du motoventilateur.

3. Ensemble selon l'une des revendications précédentes, caractérisé en ce que tous les premiers éléments d'appui (30), ou tous les seconds éléments d'appui (34), appartiennent à une même pièce (18, 33).

4. Ensemble selon la revendication 3, caractérisé en ce que les premiers éléments d'appui (30) appartiennent audit flasque (18).

5. Ensemble selon la revendication 4, caractérisé en ce que les premiers éléments d'appui sont sous la forme de pattes (30) qui s'étendent radialement à l'extérieur de la partie fixe (14).

6. Ensemble selon la revendication 5, caractérisé en ce que ladite partie rotative (15) comprend un moyeu (19) pour une hélice de ventilateur, lesdits éléments de fixation (32) étant disposés radialement à l'extérieur du diamètre du moyeu (19).

7. Ensemble selon l'une des revendications précédentes, caractérisé en ce que chaque entretoise (35) a une forme sensiblement annulaire et entoure l'élément de fixation (32) associé.

8. Ensemble selon l'une des revendications précédentes, caractérisé en ce que chaque premier élément d'appui (30) présente sur sa face tournée vers le bloc (7) au moins une nervure étroite (38), allongée de façon à s'étendre en regard des tranches de plusieurs ailettes (6) et propre à déformer celles-ci en creusant son propre logement pour établir un positionnement très stable de l'élément d'appui par rapport au bloc.

9. Ensemble selon la revendication 8, caractérisé en ce que ladite nervure (38) présente un profil en V et pénètre dans lesdites tranches par son arête (41).

10. Ensemble selon l'une des revendications précédentes, caractérisé en ce que chacun desdits évidements (36) présente un profil rectangulaire et est réalisé en enlevant des bandes d'égale largeur de toutes les ailettes (6) concernées.

## Patentansprüche

1. Baugruppe, umfassend einen Wärmetauscher (1) mit einem starren Block (7), der eine erste und eine zweite Hauptfläche (25, 26) aufweist, die in etwa in parallelen Ebenen angeordnet sind, bestehend aus wenigstens einer Reihe von untereinander parallelen und zu den besagten Ebenen parallelen Rohren (3) und aus Rippen (6), und einen Lüftersatz (2), der einen Luftstrom in thermischem Kontakt mit dem Wärmetauscher erzeugen kann, insbesondere zur Kühlung eines Verbrennungsmotors eines Fahrzeugs, wobei der Lüftersatz einen ortsfesten Teil (14) und einen drehbaren Teil (15) umfaßt, der sich um eine zu den besagten Ebenen der Hauptflächen senkrechte Achse (16) drehen kann, wobei der ortsfeste Teil einen zu der besagten ersten Fläche (25) des Blocks gerichteten Flansch (18) aufweist, durch den er mit dem Wärmetauscher verbunden ist, wobei der besagte Block zwischen fest mit dem Flansch verbundenen ersten Auflageelementen (30), die auf der besagten ersten Fläche (25) zur Auflage kommen, und zweiten Auflageelementen (34), die auf der besagten zweiten Fläche (26) zur Auflage kommen, durch Befestigungselemente (32) wie Schrauben eingespannt ist, die durch den Block hindurchgehen, wobei die ersten Auflageelemente und die zweiten Auflageelemente in einem wechselseitigen Abstand, der in etwa der Dicke des Blocks entspricht, durch Abstandsstücke (35) gehalten werden, die ebenfalls durch diesen hindurchgehen, wobei jedes Befestigungselement und jedes Abstandsstück in einer Aussparung (36) des Blocks aufgenommen sind, die zwischen zwei benachbarten Rohren (3) jeder Reihe verläuft und die durch Einschnitte gebildet wird, die in mehrere benachbarte Rippen auf der gesamten Dicke des Blocks eingearbeitet sind, **dadurch gekennzeichnet**, daß jedes Abstandsstück (35) durch ein einstückig mit einem (34) der ersten und zweiten Auflageelemente ausgeführtes Teil gebildet wird, mit denen es verbunden ist, und an dem anderen (30) dieser Auflageelemente zum Anschlag kommt.

2. Baugruppe nach Anspruch 1, **dadurch gekennzeichnet**, daß die Befestigungselemente (32) in der Ebene einer der besagten Hauptflächen an den Spitzen eines Vielecks angeordnet sind, das die Achse (16) des Lüftersatzes umgibt.

3. Baugruppe nach einem der vorangehenden Ansprüche, **dadurch gekennzeichnet**, daß alle ersten Auflageelemente (30) oder alle zweiten Auflageelemente (34) zu ein und demselben Teil (18, 33) gehören.

4. Baugruppe nach Anspruch 3, **dadurch gekennzeichnet**, daß die ersten Auflageelemente (30) zu dem besagten Flansch (18) gehören.

5. Baugruppe nach Anspruch 4, **dadurch gekennzeichnet**, daß die ersten Auflageelemente in Form von Ansätzen (30) ausgeführt sind, die sich radial außerhalb des ortsfesten Teils (14) erstrecken.

6. Baugruppe nach Anspruch 5, **dadurch gekennzeichnet**, daß der besagte drehbare Teil (15) eine Nabe (19) für ein Lüfterrad umfaßt, wobei die besagten Befestigungselemente (32) radial außerhalb des Durchmessers der Nabe (19) angeordnet sind.

7. Baugruppe nach einem der vorangehenden Ansprüche, **dadurch gekennzeichnet**, daß jedes Abstandsstück (35) in etwa ringförmig ausgebildet ist und das zugehörige Befestigungselement (32) umgibt.

8. Baugruppe nach einem der vorangehenden Ansprüche, **dadurch gekennzeichnet**, daß jedes erste Auflageelement (30) auf seiner zum Block (7) gerichteten Fläche eine schmale, langgestreckte Rippung (38) aufweist, die sich gegenüber den Rändern mehrerer Rippen (6) erstreckt und diese verformen kann, indem sie ihre eigene Aufnahme austieft, um eine sehr stabile Positionierung des Auflageelements im Verhältnis zum Block herzustellen.

9. Baugruppe nach Anspruch 8, **dadurch gekennzeichnet**, daß die besagte Rippung (38) ein V-förmiges Profil aufweist und durch ihre Kante (41) in die besagten Ränder eindringt.

10. Baugruppe nach einem der vorangehenden Ansprüche, **dadurch gekennzeichnet**, daß jede der besagten Aussparungen (36) ein rechteckiges Profil aufweist und durch Abtragen von Streifen mit der gleichen Breite wie alle betroffenen Rippen (6) ausgeführt ist.

## Claims

1. An assembly comprising a heat exchanger (1) having a rigid block (7) which includes first and second main faces (25, 26) disposed substantially in parallel planes, the block consisting of at least one row of tubes (3) which are parallel to each other and parallel to the said planes, with fins (6) and a motor driven fan (2) which is arranged to produce a stream of air in thermal contact with the heat exchanger, in particular for cooling a vehicle heat engine, the motor driven fan comprising a fixed part (14) and a rotary part (15) which is rotatable about an axis (16) at right angles to the said planes of the main faces, the fixed part including a plate member (18) facing towards the said first face (25) of the block, by means of which it is assembled to the heat exchanger, the said block being clamped between first abutment elements (30) fixed to the plate member, bearing on the said first face (25), and second abutment elements (34) bearing on the said second face (26), by means of fastening elements (32) such as screws which extend through the block, the first abutment elements and the second abutment elements being held, at a distance between them which corresponds substantially to the thickness of the block, by means of spacers (35) which also extend through the latter, each fastening element and each spacer being lodged within an opening (36) in the block which extends between two adjacent tubes (3) of each row, and which is defined by cut-outs formed in a plurality of adjacent fins over the whole thickness of the block, characterised in that each spacer (35) constitutes a single component with one (34) of the first and second abutment elements with which it is associated, and comes into abutment on the other one (30) of the said abutment elements.

2. An assembly according to Claim 1, characterised in that the fastening elements (32) are disposed, in the plane of one of the said main faces, at the corners of a polygon surrounding the axis (16) of the motor driven fan.

3. An assembly according to one of the preceding Claims, characterised in that all of the first abutment elements (30), or all of the second abutment elements (34), are part of a common component (18, 33).

4. An assembly according to Claim 3, characterised in that the first abutment elements (30) are part of the said plate member (18).

5. An assembly according to Claim 4, characterised in that the first abutment elements are in the form of lugs (30) which extend radially outside the fixed part (14).

6. An assembly according to Claim 5, characterised in that the said rotary part (15) includes a fan rotor hub (19), the said fastening elements (32) being disposed radially outside the diameter of the hub (19).

7. An assembly according to one of the preceding Claims, characterised in that each spacer (35) is substantially annular in form and surrounds the associated fastening element (32).

8. An assembly according to one of the preceding Claims, characterised in that each first abutment element (30) has on its face that faces towards the block (7) at least one narrow rib (38), which is aligned in such a way as to face towards portions of a plurality of fins (6), and which is adapted to deform the latter so as to hollow out its own seating, in order to establish very stable positioning of the abutment element with respect to the block.

9. An assembly according to Claim 8, characterised in that the said rib (38) has a V-shaped profile and penetrates into the said fin portions by means of its edge (41).

10. An assembly according to one of the preceding Claims, characterised in that each of the said openings (36) has a rectangular profile and is formed by raising bands of equal width in all of the fins (6) concerned.
